# EUROPÄISCHE PATENTSCHRIFT

(11) **EP 0 412 952 B1**
(45) Veröffentlichungstag und Bekanntmachung des Hinweises auf die Patenterteilung: **12.05.1993**
(21) Anmeldenummer: 90890191.1
(22) Anmeldetag: 26.06.1990
(51) Int. Cl.: B60C 11/00

(54) **Fahrzeugluftreifen**
Vehicle tyre
Bandage pneumatique pour véhicules

(30) Priorität: 10.08.1989 AT 1915/89
(43) Veröffentlichungstag der Anmeldung: 13.02.1991
(73) Patentinhaber: Semperit Reifen Aktiengesellschaft, A-2514 Traiskirchen (AT)
(72) Erfinder: Liederer, Werner, Dr., A-2514 Traiskirchen (AT)
(74) Vertreter: Vinazzer, Edith

(56) Entgegenhaltungen:
- EP-A- 0 268 436
- US-A- 2 878 852
- PATENT ABSTRACTS OF JAPAN, Band 9, Nr. 194 (M-403)[1917], 10. August 1985; & JP-A-60 60 011 (SUMITOMO GOMU KOGYO K.K.) 06-04-1985
- PATENT ABSTRACTS OF JAPAN, Band 9, Nr. 303 (M-434)[2026], 30. November 1985; & JP-A-60 139 504 (YOKOHAMA GOMU K.K.) 24-07-1985

## Beschreibung

Die Erfindung betrifft einen Fahrzeugluftreifen mit einem Laufflächenprofil, welches sich in Umfangsrichtung aus gleichartigen, zumindest zwei unterschiedliche Umfangslängen aufweisenden Pitches zusammensetzt, deren Anordnung über den Reifenumfang nach einer geräuschoptimierten Pitchfolge erfolgt.

In den letzten Jahren ist es in der Reifenindustrie allgemein üblich geworden, das von Fahrzeugluftreifen während des Abrollens entstehende Profilgeräusch dadurch positiv zu beeinflussen, daß für die aufeinanderfolgenden Profilelemente unterschiedliche Längen gewählt werden, deren absolute Längen und deren Anordnung über den Reifenumfang rechnerisch mittels Fourier-Analyse optimiert bzw. ermittelt wird. Diese Technik ist unter dem Begriff "Pitchlängenvariation" in Fachkreisen allgemein bekannt. U.a. ist es beispielsweise üblich, drei oder fünf Pitches in unterschiedlicher Länge zu wählen und eine rechnerisch optimierte Pitchfolge zu ermitteln. Auch eine größere Anzahl von Patentliteratur existiert zu diesem Thema und es wird beispielsweise auf die US-PS 4,327.792 und die US-PS 4,598.748 verwiesen. Diese bekannten Methoden gestatten es vor allem die Amplitude der Grundwelle zu senken und die auftretenden Frequenzen auf ein breiteres Frequenzband zu verteilen. Der auf diese Weise durchgeführten rechnerischen Optimierung sind jedoch insbesondere dadurch Grenzen gesetzt, daß die Pitches nicht beliebig lang oder kurz gewählt werden dürfen, da selbstverständlich auch auf andere Profileigenschaften, wie die Stabilität der Profilelemente, das Aquaplaningverhalten usw. bedacht genommen werden muß.

Ein Reifen gemäß dem Oberbegriff des Anspruchs 1 ist z.B. aus PATENT ABSTRACTS OF JAPAN, Band 9, Nr. 194 (M-403)[1917],10.August 1985; & JP-A-60 60 011 (SUMITOMO GOMU KOGYO K.K.)06.04.85 bekannt.

Ziel der Erfindung ist es, auf möglichst einfache Weise eine weitere Verminderung des Abrollgeräusches auf der Basis der Methode der Pitchlängenvariation zu erreichen.

Gelöst wird die gestellte Aufgabe erfindungsgemäß mit den Merkmalen des Anspruchs 1 gelöst.

Aus Gründen der Gesamtstabilität des Laufflächenprofiles beträgt die oben angeführte Längendifferenz maximal 15 %.

Es hat sich überraschenderweise herausgestellt, daß mit dieser einfachen Maßnahme jede Pitchfolge signifikant verbessert werden kann. So läßt sich eine Verteilung der auftretenden Frequenzen auf ein gegenüber der ursprünglichen Folge bzw. der Ausgangsfolge breiteres Frequenzband erzielen und auch eine Verminderung der Fourier-Amplituden erreichen. Der Grund hiefür dürfte darin liegen, daß dem Verhältnis zwischen dem absolut kürzesten zum absolut längsten Pitch innerhalb einer Folge eine größere Bedeutung zukommt, als der jeweiligen Anzahl von kürzeren oder längeren Pitches.

Bei einer bevorzugten Ausführungsform der Erfindung wird ein einziges Pitch entweder länger als das zweitlängste Pitch oder kürzer als das zweitkürzeste Pitch gewählt.

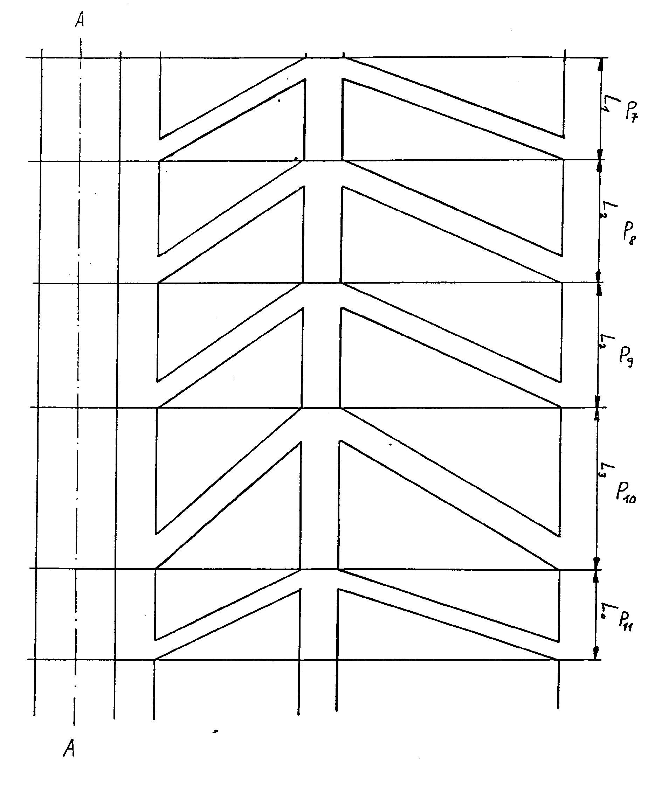

Die Erfindung wird nun anhand der Zeichnung, die ein Ausführungsbeispiel darstellt, näher beschrieben. Hiebei ist in der einzigen Zeichnungsfigur eine Teilabwicklung der Hälfte eines Laufflächenprofiles eines Fahrzeugreifens schematisch dargestellt, wobei mit A-A die Äquatorlinie gekennzeichnet ist.
Das Laufflächenprofil eines Fahrzeugluftreifens setzt sich üblicherweise aus in Umfangsrichtung aneinander gereihten gleichartigen Dessinzyklen, auch Pitches genannt, zusammen. Über den Reifenumfang wird die Gesamtzahl der Pitches im allgemeinen im Bereich zwischen 40 und 78 gewählt. In der Zeichnungsfigur sind beispielhaft die Pitches P7 bis P11 dargestellt. Um das beim Abrollen des Reifens entstehende Geräusch auf ein breites Frequenzband zu verteilen, werden, wie es heute generell üblich ist und im Stand der Technik vielfach beschrieben ist, die Pitches mit unterschiedlichen Umfangslängen versehen. Es können beispielsweise drei bis fünf unterschiedliche Pitchlängen festgelegt werden, deren günstigste Anordnung über den Reifenumfang mittels eines Rechenprogrammes ermittelt wird.

Beim vorliegenden Ausführungsbeispiel setzt sich die Pitchfolge grundsätzlich aus Pitches mit drei unterschiedlichen Pitchlängen L1, L2, L3 zusammen, wobei L1 die Länge des kürzesten, L3 die Länge des längsten und L2 die Länge des mittleren Pitches bedeutet. Nach der Erfindung ist nun an einer Stelle des Reifenumfanges ein einziges Pitch P11 vorgesehen, dessen Länge L0 um 5 bis 15 % kleiner ist als die Länge L1 des kürzesten Pitches.

Es hat sich als ebenso günstig herausgestellt, wenn ein einzelnes Pitch innerhalb einer Pitchfolge um 5 bis 15 % länger ausgeführt wird als das ansonsten längste (demnach das zweitlängste) Pitch.

Um die Gesamtstabilität des Laufflächenprofiles, die mit weiteren Profileigenschaften, wie das Abriebsverhalten, das Fahrverhalten etc., Eng korreliert, nicht zu verschlechtern, sollten innerhalb einer Pitchfolge höchstens zwei absolut kürzeste bzw. absolut längste Pitches gemäß der vorliegenden Erfindung vorhanden sein. Die günstigste Stelle dieses Pitches bzw. die günstigsten Stellen dieser Pitches innerhalb der Pitchfolge läßt bzw. lassen sich mittels eines Rechenprogrammes ermitteln.

Üblicherweise wird das Verhältnis von kürzestem Pitch zu längstem Pitch zwischen 1:1,4 bis 1:1,6, bevorzugt bei etwa 1:1,56, gewählt. Durch die Erfindung läßt sich dieses Verhältnis problemlos und günstigerweise in einen Bereich bis zu 1:1,8 verschieben.

Es sei noch erwähnt, daß die vorliegende Erfindung bei allen denkbaren Pitchfolgen, also auch bei Folgen, wo zumindest rechnerisch sämtliche Pitches voneinander unterschiedliche Längen aufweisen, anwendbar ist.

## Patentansprüche

1. Fahrzeugluftreifen mit einem Laufflächenprofil, welches sich in Umfangsrichtung aus gleichartigen, zumindest zwei unterschiedliche Umfangslängen (L) aufweisenden Pitches (P) zusammensetzt, deren Anordnung über den Reifenumfang nach einer geräuschoptimierten Pitchfolge erfolgt, wobei innerhalb der Pitchfolge, d.h. Reifenumfang am gesamten, höchstens zwei Pitches (P₁₁) angeordnet sind, deren Länge (Lₒ) entweder kleiner ist als die Länge (L₁) des zweitkürzesten Pitches (P₇) oder größer ist als die Länge des zweitlängsten Pitches, dadurch gekennzeichnet, daß die Längendifferenz zwischen den beiden Kürzesten oder längsten Pitches mindestens 5 % und höchstens 15 % beträgt.

2. Fahrzeugluftreifen nach Anspruch 1, dadurch gekennzeichnet, daß ein einziges Pitch entweder länger als das zweitlängste Pitch oder kürzer als das zweitkürzeste Pitch gewählt wird.

3. Fahrzeugluftreifen nach einem der Ansprüche 1 bis 2, dadurch gekennzeichnet, daß innerhalb der Pitchfolge das Verhältnis der Längen vom absolut kürzesten zum absolut längsten Pitch bis zu 1:1,8 beträgt.

4. Fahrzeugluftreifen nach einem der Ansprüche 1 bis 3, dadurch gekennzeichnet, daß die optimale Anordnung der maximal zwei längsten bzw. maximal zwei kürzesten Pitches innerhalb der Pitchfolge rechnerisch ermittelt ist.

## Claims

1. Pneumatic vehicle tyre, having a tread surface profile which, when viewed with respect to the circumferential direction, comprises similar pitches (P) having at least two different circumferential lengths (L), such pitches being disposed over the circumference of the tyre according to a noise-optimised pitch sequence, wherein a maximum of two pitches (P₁₁) are disposed within the pitch sequence, i.e. on the total circumference of the tyre, the length (Lₒ) of such pitches being either smaller than the length (L₁) of the second shortest pitch (P₇) or greater than the length of the second longest pitch, characterised in that the difference in length between the two shortest or longest pitches is at least 5 % and at most 15 %.

2. Pneumatic vehicle tyre according to claim 1, characterised in that one single pitch is selected to be either longer than the second longest pitch or shorter than the second shortest pitch.

3. Pneumatic vehicle tyre according to one of claims 1 to 2, characterised in that the ratio of the lengths from the absolutely shortest pitch to the absolutely longest pitch within the pitch sequence is up to 1 : 1.8.

4. Pneumatic vehicle tyre according to one of claims 1 to 3, characterised in that the optimum disposition of the maximum two longest pitches and respectively of the maximum two shortest pitches within the pitch sequence is determined by computer.

## Revendications

1. Bandage pneumatique pour véhicules comprenant une sculpture de sa surface de roulement constituée par l'assemblage en direction périphérique d'au moins deux pas (P) de même type et de longueurs (L) différentes et dont l'agencement est réalisé sur la périphérie du bandage selon une succession optimale pour amortir les bruits, dans lequel deux pas au maximum (P₁₁) sont disposés à l'intérieur de la succession de pas, c'est-à-dire sur la totalité de la périphérie du bandage, dont la longueur (Lₒ) est inférieure à la longueur (L₁) du second pas le plus court (P₇) ou supérieure à la longueur du second pas le plus long, caractérisé en ce que la différence de longueur entre les deux pas les plus courts ou les deux pas les plus longs est d'au moins 5 % et au maximum de 15 %.

2. Bandage pneumatique pour véhicules, caractérisé en ce que l'on choisit un pas unique qui est soit plus long que le second pas le plus long, soit plus court que le second pas le plus court.

3. Bandage pneumatique pour véhicules selon la revendication 2, caractérisé en ce qu'à l'intérieur d'une succession de pas, le rapport entre les longueurs absolues du pas le plus court et du pas le plus long peut atteindre 1:1,8.

4. Bandage pneumatique pour véhicules selon l'une quelconque des revendications 1 à 3, caractérisé en ce que l'agencement optimal des pas les plus longs ou les plus courts qui sont au maximum au nombre de deux à l'intérieur de la succession des pas est déterminé par calcul.
